# EUROPEAN PATENT APPLICATION

(11) **EP 1 506 716 A1**
(43) Date of publication of application: **16.02.2005**
(21) Application number: 04460036.9
(22) Date of filing: 26.07.2004
(51) Int. Cl.: A23L 2/02, A23L 2/60, A23L 1/09

(54) **Method of producing high-sugar fruit juice**

(30) Priority: 13.08.2003 PL 36164903
(71) Applicant: Cargill Spolka z.o.o, 55-040 Kobierzyce (PL)
(72) Inventor: Musial, Dariusz, 50-361 Wroclaw (PL); Romaniuk, Jacek, 51-663 Wroclaw (PL); Winecka, Alicja, 53-407 Wroclaw (PL)
(74) Representative: Rejman, Tadeusz (PL)

(57) **Abstract**

The object of the invention makes the method of producing high-sugar fruit juice constituting a flavouring for beverage and for the preparation of beverage by diluting it with water.

The method of producing high-sugar fruit juice of the invention consists in fruit concentrate being blended with a substance of high sugar contents and flavours, condensing substances and preservatives added. The method is characterized as using the carbohydrates composition as the substance of high sugar contents, advantageously in the form of glucose-fructose syrup. The carbohydrates composition is made of fructose in the amount of 35 - 60% by weight, glucose in the amount of 35 - 60% by weight, maltose in the amount of 0 - 10% by weight and maltotriose in the amount of 0 - 5% by weight. The sum of the fructose and glucose amounts is at least 80% by weight.

## Description

The method of producing high-sugar fruit juice constituting a flavouring for beverage and to prepare beverage upon diluting it with water makes the object of the invention.

The method of producing jellies as presented in the patent description of the patent application No P-339239 published in the Bulletin of the Patent Office of the Republic of Poland No 21 of 2001 is known. According to the invention, jellies contain not less than 50 and not more than 60% sugar by weight, not less than 1.3 and not more than 2% pectin by weight, not less than 1.3 and not more than 2% citric acid by weight as well as a natural colour in an amount not less than 0.2% by weight and not more than 2% by weight and a natural odour in an amount not less than 0.05% by weight and not more than 2% by weight or fruit or vegetable condensed juice in an amount not less than 2% by weight and not more than 5% by weight.

Also known is the use of pectin esterase when processing fruits and vegetables as presented in the invention description filed under the number P-304693. The method of preparing food that contains fruits and vegetables of the invention consists in adding pectin esteraze to fruits or vegetables or to their pulp for the pectin demethoxylation and, if required, in adding calcium chloride, in allowing the formation of jelly by the demethoxylated pectin obtained from fruits or vegetables to obtain the required food.

The method of producing high-sugar of the invention consists in the fruit concentrate being blended with a substance of high sugar contents and flavours, a condensing substance of colours and preservatives added. This method is characterized as using a carbohydrates composition as the substance of high sugar contents, advantageously in the form of glucose-fructose syrup. The carbohydrates composition is made of fructose in the amount of 35 - 60% by weight, glucose in the amount of 35 - 60% by weight, maltose in the amount of 0 - 10% by weight and maltotriose in the amount of 0 - 5% by weight. The sum of the fructose and glucose amounts is at least 80% by weight.

A variety of the carbohydrates composition is made of fructose in the amount of 10 - 30% by weight, glucose in the amount of 30 - 50% by weight, maltose in the amount of 5 - 25% by weight, the remaining part constituting high sugars.

The method of the inevntion allows to obtain high-sugar fruit juice. The method of the invention allows to considerably shorten the production proces since the sugar diluting process and the sugar filtration do not appear in it. This has been obtained owing to the use of glucose-fructose syrup that is in the liquid form and blends with other substances, especially fruit concentrate very well.

The method of the invention is explained in details following an example.

The first production stage comprises the proportioning of glucose-fructose syrup from the production tank provided with a mixer arm whereby the glucose-fructose syrup has the following composition:
- glucose: 52% by weight
- fructose: 42% by weight
- maltose: 3% by weight
- other sugars: 3% by weight.

Next, the fruit concentrate is proportioned whereupon the blending starts. A solution made up of the following products: citric acid, flavour and preservatives is prepared in the preparatory tank. The aforementioned constituents are diluted in a small quantity of water. The prepared solution is pumped over to the production tank. Upon mixing up of the production tank contents, samples are taken and the extract contents determined. If a correction is required, the corrected constituent is proportioned. The product obtained from the production tank is directed to the bottling plant to unit packages in the form of glass bottles. Capped bottles undergo the pasteurization process whereby the minimum temperature of the syrup inside the bottle should be 90°C. For the chemical preservation of the flavouring the pasteurizatuion process is not required.

The variety of the method of the invention consists in the proportioning to the production tank of glucose-fructose syrup of the following composition:
- fructose in the amount of 20% by weight,
- glucose in the amount of 40% by weight,
- maltose in the amount of 15% by weight,
- the remaining part constituting high sugars.

## Claims

1. A method of producing high-sugar fruit juice, wherein fruit concentrate is blended with a substance of high sugar contents, and flavours, a condensing substance of colours and preservatives are added, **characterized in that** a carbohydrates composition, advantageously in the form of glucose-fructose syrup, is used as the substance of high sugar contents.

2. A method of claim 1, **characterized in that** the carbohydrates composition is made of fructose in the amount of 35 - 60% by weight, glucose in the amount of 35 - 60% by weight, maltose in the amount of 0 - 10% by weight and maltotriose in the amount of 0 - 5% by weight.

3. A method of claim 1, **characterized in that** the sum of the fructose and glucose amounts is at least 80% by weight.

4. A method of claim 1, **characterized in that** the carbohydrates composition is made of fructose in the amount of 10 - 30% by weight, glucose in the amount of 30 - 50% by weight, maltose in the amount of 5 - 25% by weight, the remaining part constituting high sugars.
